# EUROPEAN PATENT APPLICATION

(11) **EP 4 667 784 A1**
(43) Date of publication of application: **24.12.2025**
(21) Application number: 23922242.5
(22) Date of filing: 11.07.2023
(51) Int. Cl.: F16H 57/08, F16H 1/32, F16H 57/12

(54) **NEW-TYPE DISPLACEMENT PLANETARY CARRIER SYSTEM, AND PLANETARY TRANSMISSION DEVICE COMPRISING SAME**

(30) Priority: 14.02.2023 CN 202310160094
(71) Applicant: AICI Precision (Shenzhen) Co., Ltd., Shenzhen, Guangdong 518101 (CN)
(72) Inventor: LING, Zilong, Shenzhen, Guangdong 518101 (CN)
(74) Representative: Cabinet Beau de Loménie
(86) International application number: PCT/CN2023/106791
(87) International publication number: WO 2024/169117

(57) **Abstract**

Disclosed in the present invention are a new-type displacement planetary carrier system and a planetary transmission device comprising same. The displacement planetary carrier system comprises an elastic planetary carrier, a wedging slider and a wedging depth adjustment mechanism, wherein the wedging slider gradually shrinks in cross section in a wedging direction, has a side surface in contact with the elastic planetary carrier, and has one end surface in contact with the wedging depth adjustment mechanism; the elastic planetary carrier is provided with multiple staggered notches, each of which is provided with a wedge slot for the wedging slider to be embedded therein; and the wedging depth adjustment mechanism is an adjustment bolt/nut or an elastic element mounted on the elastic planetary carrier or on the wedging slider to exert a wedging force to the wedging slider. In the planetary transmission device, the wedging slider is wedged to enlarge the circumference of the planetary carrier to increase the radius of revolution of a planetary gear, such that the planetary gear moves toward an inner gear ring to compress the side clearance between the planetary gear and the inner gear ring, so as to reduce the back clearance of planetary transmission.

## Description

### TECHNICAL FIELD

The present invention relates to a planetary transmission device, in particular to a new-type displacement planetary carrier system and a planetary transmission device containing the same.

### BACKGROUND ART

A planetary gear transmission device generally comprises a planetary carrier, a plurality of sun gears, an inner gear ring and planetary gears, the planetary gear meshes with the sun gear and the inner gear ring, and a self-rotating shaft of the planetary gear is supported by the planetary carrier. Among many planetary gear mechanisms, a 3K-type planetary transmission device comprises a 3K-I type planetary transmission device, a 3K-II type planetary transmission device and a 3K-III type planetary transmission device, and further comprises a single planetary gear type and a compound planetary gear type. There have been numerous articles on a structure, setting of gear parameters and calculation of a transmission ratio of the 3K-type planetary transmission device, which are general technical knowledge in the field of planetary gear transmission. Particularly, over the past 50 years, domestic and foreign researchers have given detailed descriptions on various structures, tooth profiles and other technical parameters of the 3K-type planetary transmission device in many articles. In transmission with more than 2 planetary gears, the planetary carrier is typically a spatial frame structure formed by connecting two annular side plates (also referred to as double walls) through uniformly distributed supporting columns (also referred to as connecting plates). The number of supporting columns corresponds to the number of planetary gears. Bearings of the planetary gears are generally installed inside the planetary gears, in some cases where the diameters of the planetary gears are small, so that the bearings are designed to be arranged within the side plates in order to ensure their adequate service life.

CN103322131B discloses a planetary gear reducer capable of self-compensating an axial clearance. The reducer uses elastic elements pressed against end walls of a second sun gear and a second planetary carrier to compensate for the axial clearance through the release of elastic force of the elastic elements. However, the device only avoids contact between axial components and does not resolve a backlash between a planetary gear and an inner gear ring. CN113757349A discloses a displacement planetary carrier system and a planetary transmission device containing the same. The device comprises an elastic planetary carrier, a rigid tapered sleeve, and a rigid tapered sleeve axial adjustment mechanism. It can reduce a backlash between a planetary gear and an inner gear ring by expanding the planetary carrier.

### SUMMARY OF THE INVENTION

The present invention provides a new-type displacement planetary carrier system and a planetary transmission device containing the same. The planetary transmission device expands a circumference of a planetary carrier by wedging sliders, increases revolution radii of planetary gears, pushes the planetary gears toward an inner gear ring, and compresses backlashes between the planetary gears and the inner gear ring, thereby reducing the backslash of planetary transmission.

The objective of the present invention is achieved by the following technical solutions:
A first aspect of the present invention relates to a new-type displacement planetary carrier system, including an elastic planetary carrier, wedging sliders, and a wedging depth adjustment mechanism;
the wedging slider has a tapered cross-section in a wedging direction, where its side surface is in contact with the elastic planetary carrier, and one end surface is in contact with the wedging depth adjustment mechanism; The wedging slider herein refers to a slider configured to be inserted into a wedge slit with a relatively smaller cross-sectional end thereof, causing the slider to slide along and wedge within the wedge slit, thereby expanding the wedge slit; and a shape of the wedging slider comprises, but is not limited to, a wedge shape, a conical shape, or a frustum shape, where the conical shape comprises a circular conical shape and a polygonal conical shape, and the frustum shape comprises a circular frustum shape and a polygonal frustum shape.

The elastic planetary carrier comprises first spaces for accommodating the planetary gears. At least one axial end of each first space is provided with a shaft or shaft hole for mounting the planetary gear. A side wall of the elastic planetary carrier between every two adjacent first spaces is machined with staggered notches. The staggered notches enable a circumference of a side wall of the elastic planetary carrier to undergo elastic deformation. The elastic planetary carrier is also provided with wedge slits located in the staggered notches for embedding the wedging sliders. Contact surfaces between the wedge slits and the wedging sliders have the same wedge angle. As the wedging sliders are wedged in, the staggered notches can be expanded. One wedging slider is embedded in each wedge slit.

The staggered notch herein refers to a structure where a rigid component is alternately cut to induce elastic deformation and interconnection is retained only by partial thin walls. Bending deformation of the thin walls enables the rigid component to elastically elongate or shorten. The staggered notches, utilized for increasing or decreasing the circumference of an annular component, are commonly used in various expansion-type hardware fixtures, such as cutter collets. The staggered notches may comprise one or multiple sets arranged in series or in parallel.

The wedging depth adjustment mechanism is an adjustment bolt/nut or an elastic element installed on the elastic planetary carrier or the wedging sliders, used to apply a wedging force to the wedging sliders. The wedging depth adjustment mechanism is adopted to wedge the wedging sliders so as to expand the elastic planetary carrier, thereby increasing the revolution radii of the planetary gears mounted therein and reducing the backlashes between the planetary gears and the inner gear ring.

Furthermore, the wedging depth adjustment mechanism is a plate spring, with one plate spring corresponding to each wedging slider. One end of the plate spring is fixed to an end face of the elastic planetary carrier, and the other end presses against the corresponding wedging slider to apply the wedging force.

Furthermore, the wedging depth adjustment mechanism is a plate spring, with one plate spring corresponding to each wedging slider. One end of the plate spring is fixed to an end face of the wedging slider, and the other end presses against the elastic planetary carrier to apply the wedging force.

Furthermore, the wedging depth adjustment mechanism is an adjustment bolt. An end of the wedging slider with a smaller cross-section is machined with a threaded hole. The adjustment bolt is screwed into the wedging slider, and a bolt head of the adjustment bolt presses against the elastic planetary carrier, utilizing the pulling force of the adjustment bolt to apply the wedging force to the wedging slider.

Furthermore, the wedging depth adjustment mechanism is an adjustment bolt. The elastic planetary carrier is provided with a threaded hole. The adjustment bolt is screwed into the threaded hole, and a bolt head of the adjustment bolt presses against the wedging slider to apply the wedging force; or, an additional washer is provided to press against the wedging slider, and the adjustment bolt applies the wedging force to the wedging slider by tightening the washer.

Furthermore, an effective wedge angle of the wedging sliders ranges from 4 ° to 11 °. The effective wedge angle refers to the angle between the contact surfaces of the wedging slider and two sides of the wedge slit.

A second aspect of the present invention discloses a planetary transmission device. A planetary carrier of the planetary transmission device is the displacement planetary carrier system according to the first aspect of the present invention. The planetary transmission device is a 3K-type planetary transmission device. The wedging depth adjustment mechanism is used to push wedging sliders to expand the elastic planetary carrier, thereby increasing revolution radii of planetary gears mounted in the elastic planetary carrier and reducing the backlashes between the planetary gears and an inner gear ring.

A third aspect of the present invention discloses a planetary transmission device. A planetary carrier of the planetary transmission device is the displacement planetary carrier system according to the first aspect of the present invention. The planetary transmission device is a 3K-type planetary transmission device without a sun gear, and the displacement planetary carrier system of the planetary transmission device serves as an input end. The wedging depth adjustment mechanism is used to push wedging sliders to expand the elastic planetary carrier, thereby increasing revolution radii of planetary gears mounted in an elastic planetary carrier and reducing backlashes between the planetary gears and an inner gear ring.

A fourth aspect of the present invention discloses a planetary transmission device. A planetary carrier of the planetary transmission device is the displacement planetary carrier system according to the first aspect of the present invention. Based on a 3K-type planetary transmission device without a sun gear, the device further comprises an additional sun gear and at least two additional third planetary gears. The additional sun gear meshes with the third planetary gears and drives the third planetary gears to rotate. Each of the third planetary gears is coaxially installed and fixed relative to one planetary gear of the planetary transmission device. The additional sun gear of the planetary transmission device serves as an input end. A wedging depth adjustment mechanism is used to push wedging sliders to expand an elastic planetary carrier, thereby increasing revolution radii of planetary gears mounted in an elastic planetary carrier and reducing backlashes between the planetary gears and an inner gear ring.

A fifth aspect of the present invention discloses a planetary transmission device. A planetary carrier of the planetary transmission device is the displacement planetary carrier system according to the first aspect of the present invention. The planetary transmission device is a 2K-H type planetary transmission device with an inner gear ring. A wedging depth adjustment mechanism is used to push wedging sliders to expand an elastic planetary carrier, thereby increasing revolution radii of planetary gears mounted in an elastic planetary carrier and reducing backlashes between the planetary gears and an inner gear ring.

Compared with the prior art, the technical solution of the present invention has the following beneficial effects:
The backlashes between the planetary gears and the inner gear ring are reduced. Particularly when the planetary transmission device is used in a reducer, the backlashes between the planetary gears and the inner gear ring in the planetary transmission device significantly influence a backlash of the transmission device. In contrast, backlashes between the sun gear and the planetary gears are divided by a reduction ratio before being reflected at an output end of the reducer. Therefore, reducing the backlashes between the planetary gears and the inner gear ring effectively minimize the backlash of the planetary transmission device. Furthermore, during specific implementation, the elastic planetary carrier equipped with the planetary gears should first be assembled into the inner gear ring. The wedging depth adjustment mechanism is then actuated to push the wedging sliders, thereby reducing the backlashes between the planetary gears and the inner gear ring. Subsequently, a sun gear with an appropriate pitch diameter is selected and adaptively installed to ensure that the backlashes between the sun gear and the planetary gears do not exceed that of a reducer equipped with a conventional planetary carrier.

### BRIEF DESCRIPTION OF THE DRAWINGS

FIG. 1a is a perspective view of a displacement planetary carrier system according to Embodiment 1 of the present invention;
FIG. 1b is an exploded view of a displacement planetary carrier system according to Embodiment 1; FIG. 1c is a top view of a displacement planetary carrier system according to Embodiment 1; FIG. 1d is a cross-sectional view taken along a first notch of a displacement planetary carrier system according to Embodiment 1;
FIG. 1e is a perspective view of a displacement planetary carrier system with planetary gears according to Embodiment 9 of the present invention;
FIG. 2a is a perspective view of a displacement planetary carrier system according to Embodiment 2 of the present invention; FIG. 2b is an exploded view of a displacement planetary carrier system according to Embodiment 2; FIG. 2c is a top view of a displacement planetary carrier system according to Embodiment 2; FIG. 2d is a cross-sectional view taken along a first notch of a displacement planetary carrier system according to Embodiment 2;
FIG. 3a is a perspective view of a displacement planetary carrier system according to Embodiment 3 of the present invention; FIG. 3b is an exploded view of a displacement planetary carrier system according to Embodiment 3; FIG. 3c is a top view of a displacement planetary carrier system according to Embodiment 3; FIG. 3d is a cross-sectional view taken along a first notch of a displacement planetary carrier system according to Embodiment 3;
FIG. 4a is a perspective view of a displacement planetary carrier system according to Embodiment 4 of the present invention; FIG. 4b is an exploded view of a displacement planetary carrier system according to Embodiment 4; FIG. 4c is a cross-sectional view taken along a first notch of a displacement planetary carrier system according to Embodiment 4;
FIG. 5 is a simplified schematic structural diagram of a planetary transmission device according to Embodiment 5 of the present invention;
FIG. 6 is a simplified schematic structural diagram of a planetary transmission device according to Embodiment 6 of the present invention;
FIG. 7 is a simplified schematic structural diagram of a planetary transmission device according to Embodiment 7 of the present invention; and
FIG. 8 is a simplified schematic structural diagram of a planetary transmission device according to Embodiment 8 of the present invention.

Where,
1: Elastic planetary carrier
21: Wedge-shaped wedging slider
22: Circular frustum-shaped wedging slider
23: Rhombic frustum-shaped wedging slider
31: plate spring
32: Adjustment bolt
41: Planetary gear (assembly example for Embodiment 9)
4: Planetary gear (for 2K planetary transmission device in Embodiment 8)
5: Sun gear
6: First inner gear ring
7: Second inner gear ring
8: Displacement planetary carrier system
9: First planetary gear
10: Second planetary gear
11: Inner gear ring
101: Planetary shaft hole
102: Planetary shaft
103: Staggered notch
1031: First notch
1032: Second notch
1033: Third notch
106: Threaded hole
107: Wedge slit
301: Screw
14: Third planetary gear
15: Input shaft
16: Output shaft
55: Additional sun gear

### DETAILED DESCRIPTION OF THE EMBODIMENTS

In order to make objectives, technical solutions, beneficial effects and significant progress of the present invention clear, the technical solutions in embodiments of the present invention will be clearly and completely described below with reference to the drawings provided in the embodiments of the present invention, apparently, all the described embodiments are merely part of the embodiments of the present invention, rather than all the embodiments. All other embodiments obtained by a person of ordinary skill in the art based on the embodiments of the present invention, without making creative efforts, and according to existing planetary carrier systems, existing 3K planetary transmission devices, and other existing planetary transmission devices with inner gear rings, shall fall within the protection scope of the present invention.

It should be noted that terms "first", "second" and the like in the specification and claims of the present invention are merely used for distinguishing different objects instead of describing a specific order.

It should further be noted that the following specific embodiments may be combined with each other, and the same or similar concepts or processes may not be repeated in certain embodiments.

### Embodiment 1

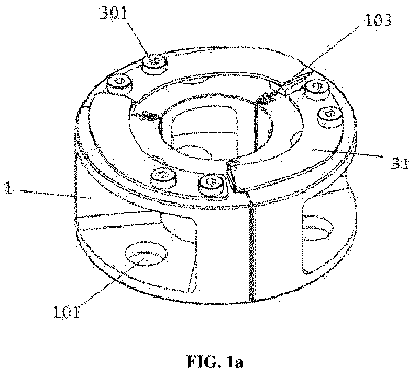

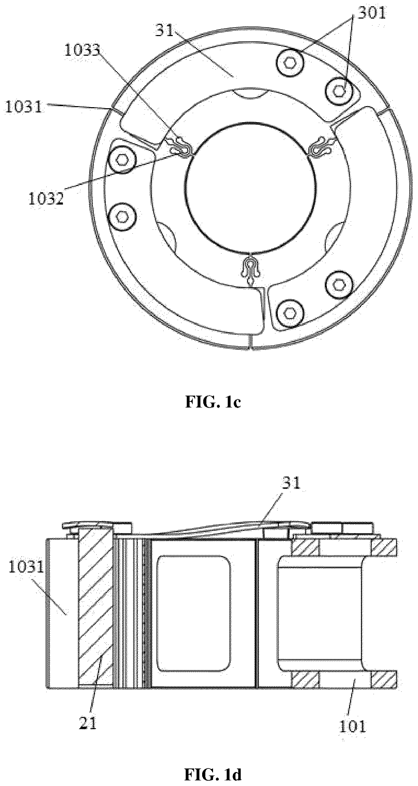

As shown in FIGs. 1a to 1d, a displacement planetary carrier system is provided. The displacement planetary carrier system is used in a planetary reducer for robots or precision automation equipment to enhance transmission accuracy. The displacement planetary carrier system comprises an elastic planetary carrier 1, wedge-shaped wedging sliders 21, and plate springs 31. The displacement planetary carrier system is configured such that the wedge-shaped wedging sliders 21, under the action of the plate springs 31, are wedged into wedge slits 107 on the elastic planetary carrier 1, thereby expanding the elastic planetary carrier 1 to increase revolution radii of planetary gears. Alternatively, the system maintains an outward expanding radial force on the planetary gears under the wedging force applied by the plate springs 31 to the wedge-shaped wedging sliders 21. After the displacement planetary carrier system of this embodiment is assembled with the planetary gears and installed into a planetary transmission device, the planetary gears located within the elastic planetary carrier 1 are pressed against an inner gear ring meshing therewith, reducing backlashes between the planetary gears and an outer ring gear and improving the transmission accuracy. The annular frame planetary carrier in this embodiment has a double-side-plate frame structure. The displacement planetary carrier system does not cause any interference with the planetary gears or a sun gear.

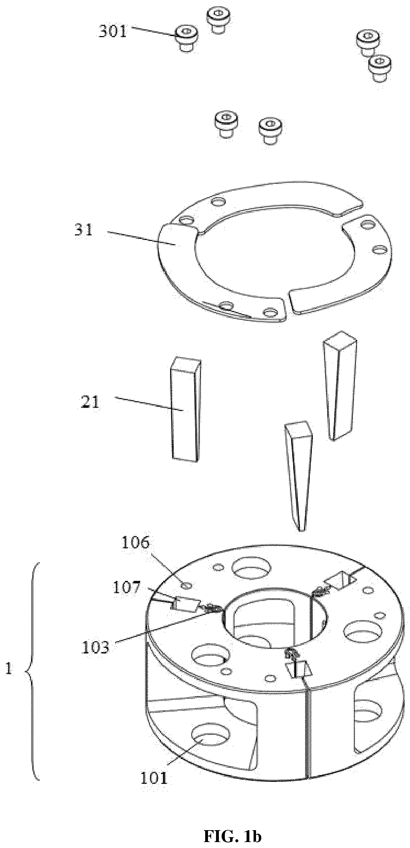

The three wedge-shaped wedging sliders 21 are used to be respectively wedged into the wedge slits 107 of the elastic planetary carrier 1. As shown in FIG. 1b, each wedge-shaped wedging slider 21 comprises two opposite wedge-angle surfaces and two opposite parallel surfaces. An angle formed by the intersection of the two wedge-angle surfaces is a wedge angle, which is 6 degrees. A cross-section of the wedge-shaped wedging slider 21 is rectangular, tapering towards one end. An end of the wedge-shaped wedging slider 21 with a smaller cross-section is wedged into the elastic planetary carrier 1, while the other end abuts against the plate spring 31. As shown in FIGS. 1c to 1e, the elastic planetary carrier 1 is an integrated annular structure including first spaces for accommodating three planetary gears. Side plates at both axial ends of each first space are provided with planetary shaft holes 101 for mounting planetary shafts of the planetary gears. Staggered notches 103 are machined on a side wall of the elastic planetary carrier 1, avoiding the first spaces. The staggered notches 103 are configured to elastically elongate a circumference of the side wall of the elastic planetary carrier 1 when force is applied, causing elastic deformation of the elastic planetary carrier 1. The staggered notches 103 are formed by three interleaved notches, essentially constituting two staggered notches in series. The staggered notches 103 comprise a first notch 1031, a second notch 1032, and a third notch 1033, which are axially through the elastic planetary carrier 1 but radially non-through. The second notch 1032 and the third notch 1033 open on the same side and are arranged on the side opposite to the first notch 1031, forming a series connection of a staggered notch formed by the first notch 1031 and the second notch 1032 with a staggered notch formed by the first notch 1031 and the third notch 1033.

A variety of structures can be employed to elastically deform the elastic planetary carrier 1. The above description is merely exemplary. The essential principle is to elongate the annular circumference of the elastic planetary carrier 1. Therefore, a ring of the elastic planetary carrier 1 must not be a perfect circle; instead, its circumference must be made elongatable by machining various patterns of staggered notches. Furthermore, these elongatable staggered notches are distributed between every two adjacent planetary gears. This distribution facilitates the uniform elongation of the distances between the planetary gears. During the expansion of the elastic planetary carrier 1, this arrangement allows the planetary gears to move more effectively in a radial direction without altering their distribution phase.

Three wedge slits 107 are provided in the axial direction of the elastic planetary carrier 1. These wedge slits 107 are located on the first notches 1031 of the staggered notches 103, avoiding the interleaved regions of the staggered notches 103 (the interleaved regions refer to the regions forming the thin-walled structure).

The wedge slit 107 is formed by machining a pair of opposing surfaces, which form a wedge angle, on the two side walls of the first notch 1031. The internal contour of the wedge slit 107 is machined to match the external contour of the wedge-shaped wedging slider 21. The internal contour of the wedge slit is not overly restricted, provided that it allows the two walls of the first notch 1031 to make contact with the wedge-angle surfaces of the wedge shaped wedging slider 21, enables the insertion of the wedge shaped wedging slider 21 during the wedging process, and induces a slight elastic deformation in the elastic planetary carrier 1.

The displacement planetary carrier system comprises three plate springs 31. One side of each plate spring 31 is provided with a screw hole adapted to engage with the threaded hole 106, allowing the plate spring 31 to be fixed to the elastic planetary carrier 1 using a screw 301. The other side of the plate spring 31 presses against an end of the wedge shaped wedging slider 21 with a larger cross-section, applying a wedging force to the wedge shaped wedging slider 21 in the direction towards the end of the wedge shaped wedging slider 21 with the smaller cross-section. Specifically, the spring force of the plate spring 31 generates a wedging force on the wedge shaped wedging slider 21 oriented towards its end with the smaller cross-section. After the displacement planetary carrier system of this embodiment is assembled with the planetary gears and installed into a planetary transmission device, the plate springs 31 push the wedge-shaped wedging sliders 21 to be wedged into the wedge slits 107 on the first notches 1031 of the staggered notches 103 in the elastic planetary carrier 1. This action expands the elastic planetary carrier 1, causing the planetary gears mounted on the elastic planetary carrier 1 to be pushed outward. This increases the revolution radius of the planetary gears, pressing them against the meshing inner gear ring, thereby eliminating the backlashes between the planetary gears and the inner gear ring. During specific implementation, the planetary gears and the inner gear ring are assembled first, and then the wedge-shaped wedging sliders 21 are inserted, followed by the installation of the plate springs 31.

### Embodiment 2

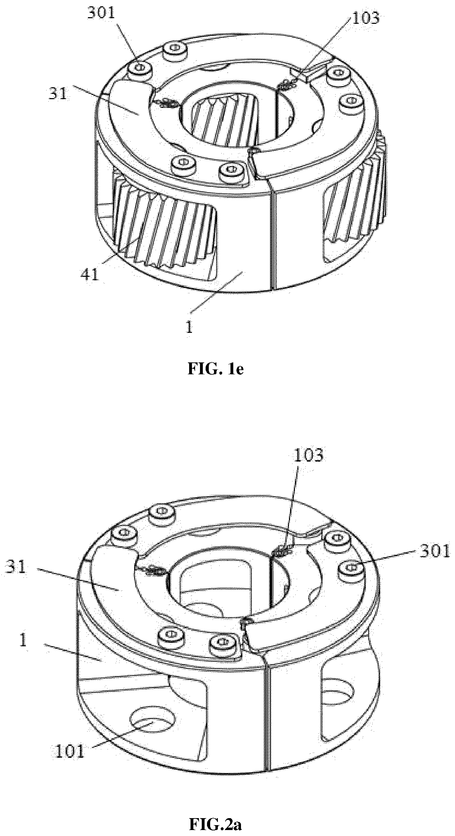

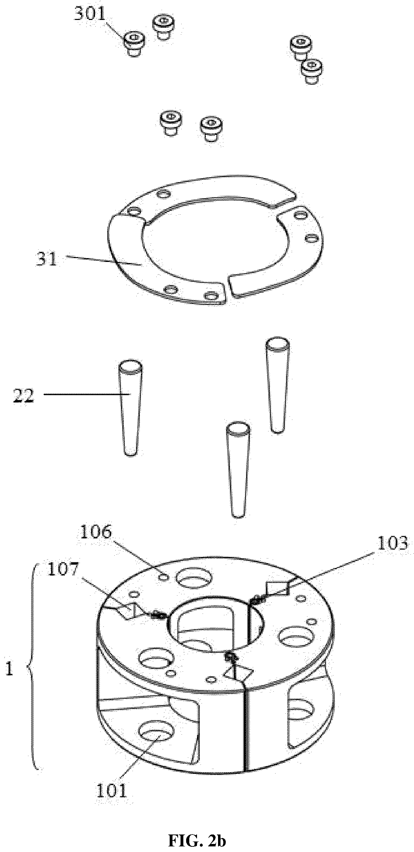

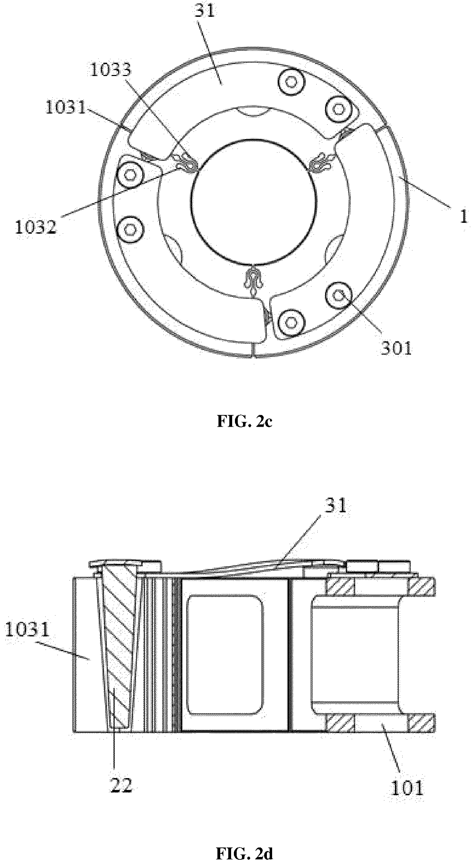

As shown in FIGS. 2a to 2d, the present invention further discloses a displacement planetary carrier system. The system comprises an elastic planetary carrier 1, conical frustum shaped wedging sliders 22, and plate springs 31. The structure and connection method of the plate springs are identical to those in Embodiment 1 and will not be reiterated herein. The elastic planetary carrier 1 is similar to that in Embodiment 1. Identical aspects will not be described, and only the distinguishing features are detailed below.

As shown in FIGS. 2a to 2d, three rhombic wedge slits 107 are provided in an axial direction of the elastic planetary carrier 1. These wedge slits are located at first notches 1031 of staggered notches 103, avoiding interleaved regions of the staggered notches 103. A pair of opposite angles of each rhombic wedge slit 107 are located on the first notch 1031.

The three conical frustum-shaped wedging sliders 22 are used to be respectively wedged into the wedge slits 107 of the elastic planetary carrier 1. A cone angle of pyramidal sides of the rhombic wedge slit 107 is identical to that of a conical surface of the conical frustum-shaped wedging slider 22, with rhombic pyramidal surface tangent to the circular conical surface. An end of the conical frustum-shaped wedging slider 22 with a smaller cross-section is wedged into the wedge slit 107 of the elastic planetary carrier 1, while the other end abuts against the plate spring31. The cone angle of the conical frustum-shaped wedging slider 22 is 6 degrees. During specific implementation, the elastic planetary carrier 1 assembled with planetary gears and an inner gear ring are first installed, and then the conical frustum shaped wedging sliders 22 are inserted, followed by the installation of the plate springs 31.

### Embodiment 3

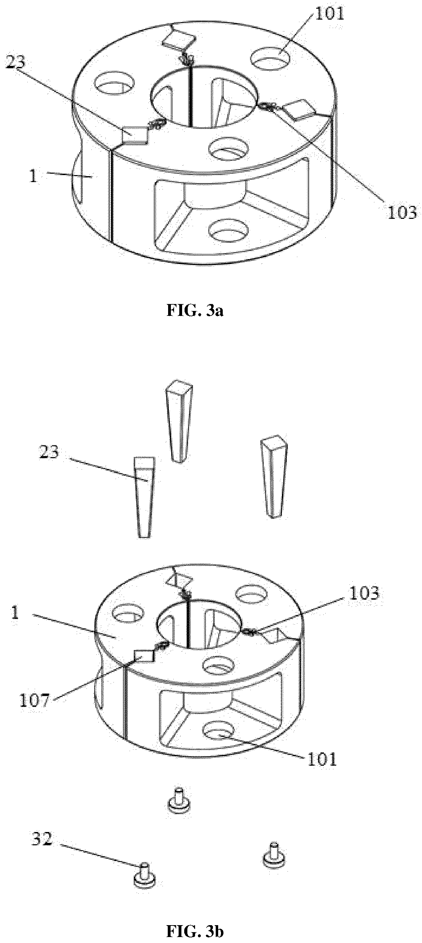

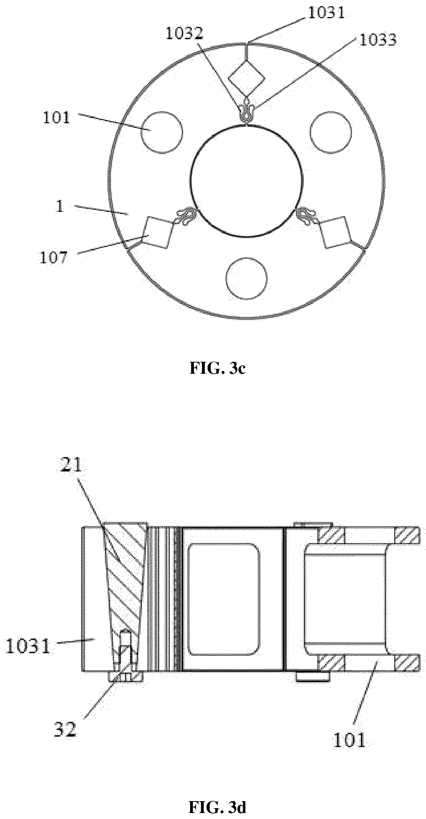

As shown in FIGS. 3a to 3d, the present invention further discloses a displacement planetary carrier system. The system comprises an elastic planetary carrier 1, rhombic pyramidal frustum shaped wedging sliders 23, and adjustment bolts 32. The structure of the elastic planetary carrier 1 is identical to that in Embodiment 2 and will not be reiterated herein. Only the distinguishing features are described below.

As shown in FIG. 3d, the rhombic pyramidal frustum-shaped wedging slider 23 has a rhombic pyramidal frustum shape. Its end face with a smaller cross-section is machined with a threaded hole for threaded connection to the adjustment bolt 32. A wedge angle of the rhombic pyramidal frustum shaped wedging slider 23 is 8 degrees.

The three rhombic pyramidal frustum-shaped wedging sliders 23 are respectively wedged into wedge slits 107 on the first notches 1031 of staggered notches 103 on the elastic planetary carrier 1. When the adjustment bolt 32 is screwed into the threaded hole at the end of the rhombic pyramidal frustum-shaped wedging slider 23, a bolt head of the adjustment bolt 32 presses against the elastic planetary carrier. The pulling force of the adjustment bolt 32 generates a pulling force on the rhombic pyramidal frustum shaped wedging slider 23 in the direction towards its end with the smaller cross-section, thereby wedging the rhombic pyramidal frustum shaped wedging slider 23 in. During specific implementation, the elastic planetary carrier 1 assembled with planetary gears and an inner gear ring are first installed, and then the rhombic pyramidal frustum-shaped wedging sliders 23 are inserted, and then the adjustment bolts 32 are rotated and adjusted, thereby preventing a pre-expanded planetary carrier from making the planetary gears impossible to be installed into the inner gear ring.

### Embodiment 4

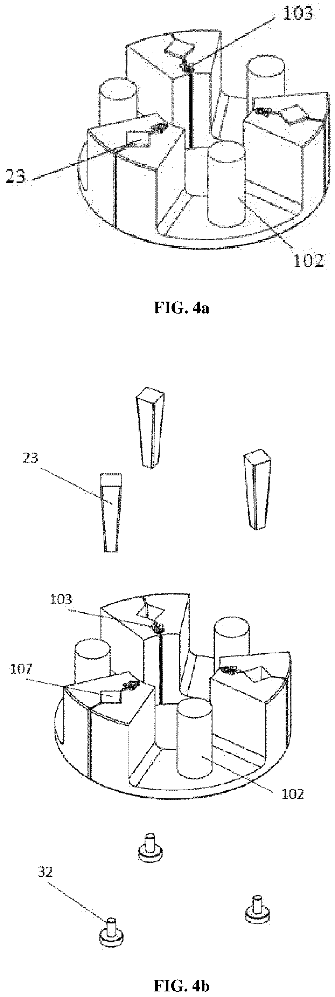

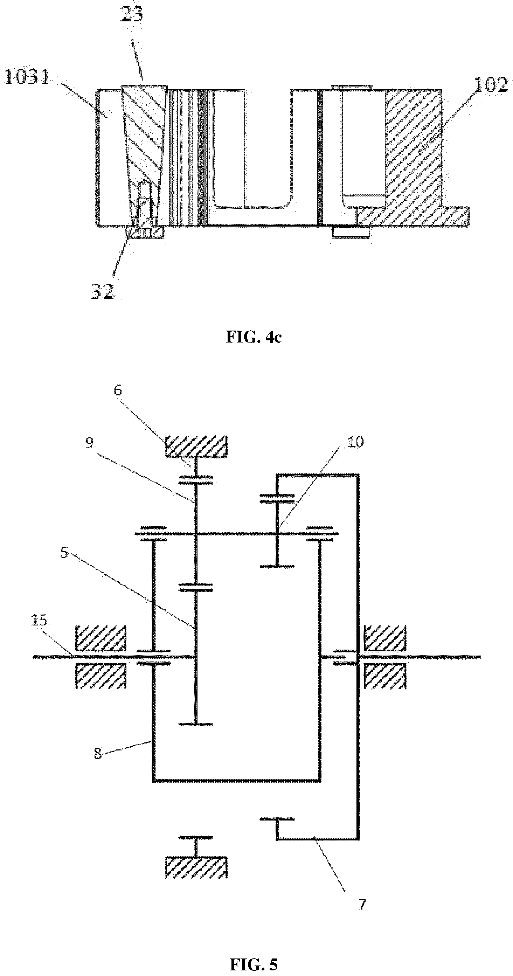

As shown in FIGS. 4a to 4c, the present invention further discloses a displacement planetary carrier system. The system comprises an elastic planetary carrier 1, rhombic pyramidal frustum-shaped wedging sliders 23, and adjustment bolts 32. The structure, connection method, and function of the adjustment bolts 32 and the rhombic pyramidal frustum-shaped wedging sliders 23 are identical to those in Embodiment 3 and will not be reiterated herein. The elastic planetary carrier 1 is a single-side-plate structure to save space. Planetary shafts 102 are directly machined on the elastic planetary carrier 1. Other structural aspects of the elastic planetary carrier 1 are similar to those in Embodiment 3 and will not be reiterated herein.

### Embodiment 5

As shown in FIG. 5, the present invention further discloses a planetary transmission device with the displacement planetary carrier system. The planetary transmission device with the displacement planetary carrier system is a 3K-type planetary transmission device, comprising a first inner gear ring 6, a second inner gear ring 7, compound planetary gears, a sun gear 5 and the displacement planetary carrier system 8, where the displacement planetary carrier system 8 comprises the elastic planetary carrier 1, the wedge-shaped wedging sliders 21, and the plate springs 31 as described in Embodiment 1. The compound planetary gears comprise a first planetary gear 9 and a second planetary gear 10. The first inner gear ring 6 meshes with the first planetary gear 9, and the second inner gear ring 7 meshes with the second planetary gear 10. A structure of the displacement planetary carrier system 8 is identical to that described in Embodiment 1, and thus will not be reiterated herein. Optionally, the planetary transmission device may also be a 3K-II type planetary transmission device. In this case, the compound planetary gears have the identical parameters and can be machined into a single gear.

Most traditional 3K-type planetary transmission devices employ a double-side-plate frame-type planetary carrier. The planetary carrier of a traditional 3K-type planetary transmission device is replaced with the displacement planetary carrier system 8 in the present invention. After assembly, the first planetary gear 9 and the second planetary gear 10 are pressed against the first inner gear ring 6 and the second inner gear ring 7, respectively, as the elastic planetary carrier 1 expands. This method of increasing the revolution radii of the planetary gears effectively eliminates the backlash. Since the two inner gear rings share a common set of planetary gears and a planetary carrier, using the displacement planetary carrier system 8 to outwardly press the planetary gears against the inner gear rings produces a more pronounced backlash elimination effect. Due to a high transmission ratio between the planetary carrier and the inner gear ring in a 3K planetary transmission device, the backlash between the sun gear 5 and the first planetary gear 9 has a comparatively smaller impact on the output backlash when the planetary transmission device is used as a reducer.

In applications where the planetary transmission device is used as a planetary reducer in robots or precision automation equipment, the second inner gear ring 7 is connected to an output shaft 16. The sun gear 5 serves as a high-speed end of the transmission; an input shaft 15 drives the sun gear 5, which in turn drives the planetary gears to roll and mesh on the first inner gear ring 6 and the second inner gear ring 7. This drives the rotation of the displacement planetary carrier system 8, which subsequently drives the second inner gear ring 7 to rotate the output shaft 16. During actual assembly, the first planetary gear 9, the second planetary gear 10, and the displacement planetary carrier system 8 are first installed into the first inner gear ring 6 and the second inner gear ring 7, and then the plate springs 31 with an appropriate spring force are selected according to practical needs and fixed to the elastic planetary carrier 1 using screws 301. The plate springs 31 apply a wedging force to the wedge-shaped wedging sliders 21, causing the planetary gears to expand outward, and the sun gear 5 is then installed. This sequence allows for the selection of a sun gear 5 that better matches the planetary gears, thereby helping to reduce the backlash between the sun gear 5 and the first planetary gear 9. Transmission precision and other performance can be remarkably improved by replacing the planetary carrier with the displacement planetary carrier system according to the present invention on existing 3K-type planetary reducers, including but not limited to Type 3K-I, Type 3K-II and Type 3K-III in the prior art.

### Embodiment 6

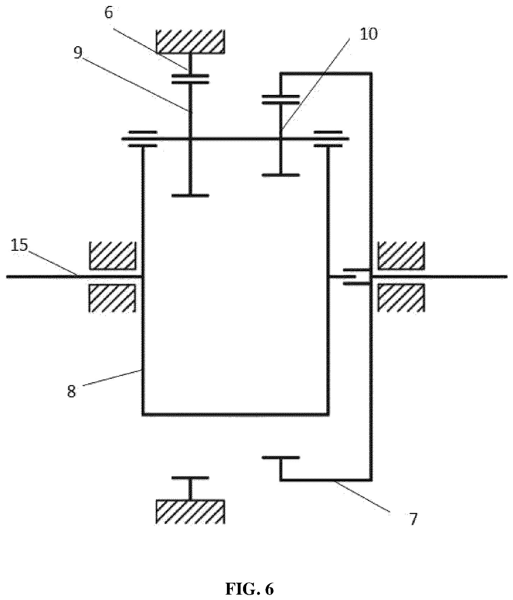

As shown in FIG. 6, the present invention further discloses a planetary transmission device with the displacement planetary carrier system. The planetary transmission device is a 3K planetary transmission device without the sun gear, and comprises a first inner gear ring 6, a second inner gear ring 7, compound planetary gears, and the displacement planetary carrier system 8. The displacement planetary carrier system 8 comprises the elastic planetary carrier 1, the wedge-shaped wedging sliders 21, and the plate springs 31 as described in Embodiment 1. The compound planetary gear comprises a first planetary gear 9 and a second planetary gear 10. The first inner gear ring 6 meshes with the first planetary gear 9, and the second inner gear ring 7 meshes with the second planetary gear 10.

Compared to a traditional 3K planetary transmission device, this planetary transmission device is not equipped with the sun gear 5. The planetary carrier of the traditional 3K-type planetary transmission device is replaced with the displacement planetary carrier system 8. A structure of the displacement planetary carrier system 8 is identical to that described in Embodiment 1, and thus will not be reiterated herein.

In applications where the planetary transmission device in this Embodiment is used as a planetary reducer in robots or precision automation equipment, the first planetary gear 9 and the second planetary gear 10 are pressed against the first inner gear ring 6 and the second inner gear ring 7, respectively, after assembly and as the displacement planetary carrier system 8 expands. This method of increasing the revolution radii of the planetary gears effectively eliminates the backlash. The displacement planetary carrier system 8 serves as a high-speed end of the transmission, specifically, an input shaft 15 is connected to the displacement planetary carrier system 8 for directly driving the displacement planetary carrier system 8. Torque is input from the displacement planetary carrier system 8, causing the displacement planetary carrier system 8 to rotate. This rotation drives the first planetary gear 9 and the second planetary gear 10 to roll and mesh on the first inner gear ring 6 and the second inner gear ring 7. The second inner gear ring 7 is connected to the output shaft. Since the first planetary gear 9 and the second planetary gear 10 are dual gears synchronously rotating on the displacement planetary carrier system 8, the second planetary gear 10 drives the second inner gear ring 7 to rotate an output shaft 16.

This Embodiment did not equipped with the sun gear, thereby avoiding transmission backlash associated with the meshing between the sun gear 5 and the first planetary gear 9 and second planetary gear 10. To transmit torque between the elastic planetary carrier 1 and the input shaft 15, and based on Embodiment 1, the elastic planetary carrier 1 is additionally provided with face radial keyways on the outer wall for torque transmission with the input shaft 15. Since the displacement planetary carrier system 8 can deform and expand, structures such as face radial keyways on the elastic planetary carrier 1 are employed to ensure torque transmission even when the planetary carrier undergoes displacement.

### Embodiment 7

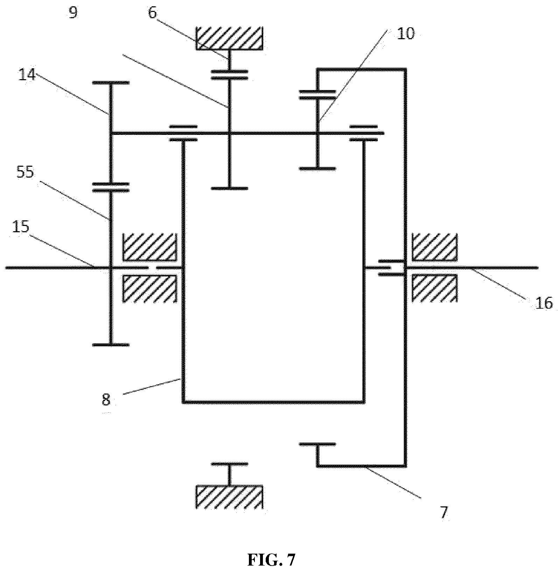

As shown in FIG. 7, a planetary transmission device with a displacement planetary carrier system is provided. The planetary transmission device has a structure similar to that of Embodiment 6, which is also based on a 3K-type planetary transmission device without a sun gear, and comprises a first inner gear ring 6, a second inner gear ring 7, a first planetary gear 9, a second planetary gear 10 and the displacement planetary carrier system 8. Structures identical to those in Embodiment 6 will not be reiterated here. Only the distinguishing features are described below. The planetary transmission device is further provided with an additional third planetary gear 14 and an additional sun gear 55. The additional sun gear 55 meshes with the third planetary gear 14 and drives the third planetary gear 14 self rotation. The third planetary gear 14 is coaxially installed and fixed relative to the first planetary gear 9 at its location; and the additional sun gear 55 of the planetary transmission device serves as an input end.

In applications where the planetary transmission device of the present invention is used as a planetary reducer in robots or precision automation equipment, the additional sun gear 55 serves as the high-speed input end. An input shaft 15 drives the additional sun gear 55, the additional sun gear 55 meshes with the third planetary gear 14 and drives the third planetary gear 14 to rotate. Since the third planetary gear 14 is coaxial and rotationally fixed to the first planetary gear 9, it drives the first planetary gear 9 to rotate. This also drives the displacement planetary carrier system 8 to revolve, which in turn drives the second inner gear ring 7 to rotate an output shaft 16. Thus, the reducer achieves a transmission path similar to that of a traditional 3K-type planetary transmission. In traditional 3K-type planetary transmission structures, the planetary gears mesh with the inner gear ring and the sun gear, so that parameters of all the gears are highly interdependent, resulting in significant difficulty in gear design and matching. In contrast, the structure proposed in this Embodiment, which removes the sun gear from the traditional 3K planetary transmission device and replaces it with an additional planetary gear set including the additional planetary gear and the additional sun gear 55 mounted on the planetary gear, can reduce the requirements for gear parameter design. This structure is beneficial to the performance of the transmission device in terms of torque load, reduction ratio, vibration, and backlash. Optionally, not all the planetary gears are provided with an additional planetary gear. For instance, three or two of six planetary gears are provided with the additional planetary gears. Furthermore, in order to better eliminate backlash and improve smoothness, the additional sun gear and the additional planetary gear can be designed with a smaller module compared to the planetary gears meshing with the inner gear ring.

### Embodiment 8

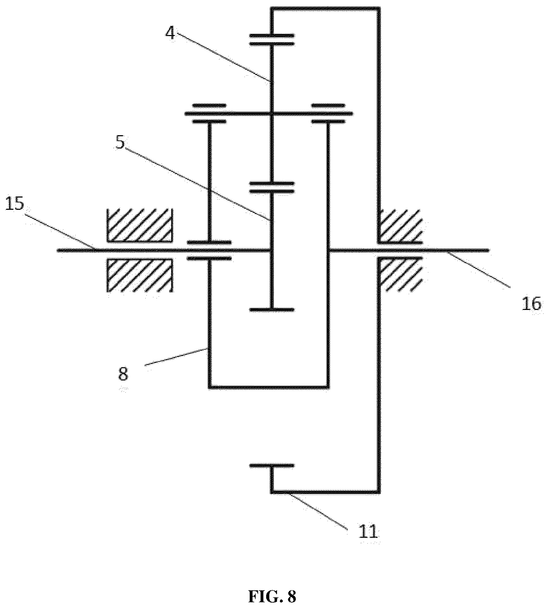

As shown in FIG. 8, a planetary transmission device containing a displacement planetary carrier system is provided. The planetary transmission device is a 2K-H planetary transmission device containing an inner gear ring, and comprises an inner gear ring 11, planetary gears 4, a sun gear 5, and the displacement planetary carrier system 8. The displacement planetary carrier system 8 comprises the elastic planetary carrier 1, the rhombic pyramidal frustum shaped wedging sliders 23, and the adjustment bolts 32 as described in Embodiment 3. The structure of the displacement planetary carrier system 8 is identical to that in Embodiment 1 and will not be reiterated herein. The planetary gear 4 meshes the sun gear 5 and the inner gear ring 11, and the planetary gear 4 is installed on the displacement planetary carrier system 8. Although the technical effect of the displacement planetary carrier system in Embodiment 1 for the 2K-H type planetary transmission device is not as pronounced as in the 3K-type, the backlashes between the planetary gears 4 and the inner gear ring 11 are reduced. To transmit torque between the elastic planetary carrier 1 and an output shaft 16, and based on Embodiment 3, the elastic planetary carrier 1 is additionally provided with face threaded holes on the end face oriented toward the output shaft. The face threaded holes correspond to larger through-holes on a connecting end face of the output shaft 16. After the displacement planetary carrier is adjusted, screws are passed through an end flange of the output shaft 16 and screwed into the threaded holes on the end face of the elastic planetary carrier 1 for fixation, enabling output torque transmission. Since the displacement planetary carrier system 8 can deform and expand, the diameter of the through-holes on the connecting end face of the output shaft 16 is greater than a sum of a screw diameter and a displacement amount of the elastic planetary carrier 1. The displacement amount" refers to a radial displacement amount of the elastic planetary carrier 1 within the displacement planetary carrier system 8. The structure is used to transmit torque after the planetary carrier displacement adjustment is completed.

In applications where the planetary transmission device is used as a planetary reducer in robots or precision automation equipment, the inner gear ring 11 is fixed. An input shaft 15 drives the sun gear 5, which in turn drives the planetary gears 4 to roll and mesh on the inner gear ring 11, and drives the rotation of the displacement planetary carrier system 8. The displacement planetary carrier system 8 and the output shaft 16 are rotationally fixed to output torque. During actual assembly, the planetary gears 4 and the displacement planetary carrier system 8 can first be installed into the inner gear ring 11. Then, the rhombic pyramidal frustum-shaped wedging sliders 23 are inserted and the adjustment bolts 32 are screwed in. The adjustment bolts 32 are rotated and adjusted according to practical needs to apply a wedging force to the rhombic pyramidal frustum shaped wedging sliders 23, causing the planetary gears 4 to expand outward. After adjustment is completed, the output shaft 16 is fixed to the elastic planetary carrier 8. Then, the sun gear 5 is installed, allowing for the selection of a sun gear 5 that better matches the planetary gears 4 after their outward expansion, thereby helping reduce the backlashes between the sun gear 5 and the planetary gears 4. Furthermore, components such as the sun gear 5 and the input shaft 15 can be pre-assembled or even integrally machined before being installed into the reducer.

### Embodiment 9

FIG. 1e shows a schematic structural view of a new-type displacement planetary carrier system according to Embodiment 1 of the present invention after assembly with planetary gears 41.

The planetary transmission device of the present invention can also be applied as an accelerator, its structure being identical to that of a reducer, and thus will not be reiterated here.

The above embodiments are merely intended to illustrate the technical solutions of the present invention, rather than to limit them. Although the present invention has been described in detail with reference to the foregoing embodiments, it should be understood by those of ordinary skill in the art that they may still modify the technical solutions described in the foregoing embodiments, or equivalently replace some or all of the technical features thereof. However, these modifications or replacements do not cause the essence of the corresponding technical solutions to depart from the scope of the technical solutions of the embodiments of the present invention. Non-essential improvements, adjustments, or replacements made by those skilled in the art based on the content of this description shall fall within the scope claimed by the present invention.

## Claims

1. A new-type displacement planetary carrier system, **characterized in that**, the displacement planetary carrier system (8) comprises an elastic planetary carrier (1), wedging sliders, and a wedging depth adjustment mechanism;
the wedging slider has a tapered cross-section in a wedging direction, where its side surface is in contact with the elastic planetary carrier (1), and one end surface is in contact with the wedging depth adjustment mechanism;
the elastic planetary carrier (1) comprises first spaces for accommodating the planetary gears; at least one axial end of each first space is provided with a shaft or shaft hole for mounting the planetary gear; a side wall of the elastic planetary carrier (1) between every two adjacent first spaces is machined with staggered notches (103); the staggered notches (103) are capable of undergoing elastic deformation of a circumference of a side wall of the elastic planetary carrier (1); the elastic planetary carrier (1) is further provided with wedge slits (107) located in the staggered notches (103) for embedding the wedging sliders; contact surfaces between the wedge slits (107) and the wedging sliders have the same wedge angle, and the staggered notches are capable of being expanded as the wedging sliders are wedged in;
the wedging depth adjustment mechanism is an adjustment bolt or an adjustment nut or an elastic element installed on the elastic planetary carrier (1) or the wedging sliders; the wedging depth adjustment mechanism is used to apply a wedging force to the wedging sliders; the wedging depth adjustment mechanism is adopted to wedge the wedging sliders so as to expand the elastic planetary carrier (1), thereby increasing the revolution radii of the planetary gears mounted therein and reducing the backlashes between the planetary gears and the inner gear ring.

2. The new-type displacement planetary carrier system according to claim 1, **characterized in that**, the wedging depth adjustment mechanism is a plate spring (31), with one plate spring (31) corresponding to each wedging slider; one end of the plate spring (31) is fixed to an end face of the elastic planetary carrier (1), and the other end presses against the corresponding wedging slider to apply the wedging force.

3. The new-type displacement planetary carrier system according to claim 1, **characterized in that**, the wedging depth adjustment mechanism is a plate spring (3), with one plate spring (3) corresponding to each wedging slider; one end of the plate spring (3) is fixed to an end face of the wedging slider, and the other end presses against the elastic planetary carrier (1) to apply the wedging force.

4. The new-type displacement planetary carrier system according to claim 1, **characterized in that**, the wedging depth adjustment mechanism is an adjustment bolt (32); an end of the wedging slider with a smaller cross-section is machined with a threaded hole; the adjustment bolt (32) is screwed into the wedging slider, and a bolt head of the adjustment bolt (32) presses against the elastic planetary carrier (1), utilizing the pulling force of the adjustment bolt to apply the wedging force to the wedging slider.

5. The new-type displacement planetary carrier system according to claim 1, **characterized in that**, the wedging depth adjustment mechanism is an adjustment bolt (32); the elastic planetary carrier (1) is provided with a threaded hole; and the adjustment bolt (32) is screwed into the threaded hole, and a bolt head of the adjustment bolt (32) presses against the wedging slider to apply the wedging force; preferably, a washer is provided to press against the wedging slider, and the adjustment bolt (32) applies the wedging force to the wedging slider by tightening the washer.

6. The new-type displacement planetary carrier system according to claim 1, **characterized in that**, an effective wedge angle of the wedging sliders ranges from 4 ° to 11 °.

7. A planetary transmission device, wherein the planetary transmission device comprises the displacement planetary carrier system (8) according to claim 1, **characterized in that**, the planetary transmission device is a 3K-type planetary transmission device, the wedging depth adjustment mechanism is used to push the wedging sliders to expand the elastic planetary carrier (1), thereby increasing revolution radii of planetary gears mounted in the elastic planetary carrier (1) and reducing the backlashes between the planetary gears and an inner gear ring (11).

8. A planetary transmission device, wherein the planetary transmission device comprises the displacement planetary carrier system (8) according to claim 1, **characterized in that**, the planetary transmission device is a 3K-type planetary transmission device without a sun gear, and the displacement planetary carrier system (8) serves as an input end; the wedging depth adjustment mechanism is used to push wedging sliders to expand the elastic planetary carrier (1), thereby increasing revolution radii of planetary gears mounted in an elastic planetary carrier and reducing backlashes between the planetary gears and an inner gear ring (11).

9. A planetary transmission device, wherein the planetary transmission device comprises the displacement planetary carrier system (8) according to claim 1, **characterized in that**, the planetary transmission device is a 3K-type planetary transmission device without a sun gear, and the planetary transmission device further comprises an additional sun gear (55) and at least two additional third planetary gears (14), the additional sun gear (55) meshes with the third planetary gears (14) and drives the third planetary gears (14) to rotate, each of the third planetary gears (14) is coaxially installed and fixed relative to one planetary gear of the planetary transmission device; the additional sun gear (55) of the planetary transmission device serves as an input end; the wedging depth adjustment mechanism is used to push wedging sliders to expand the elastic planetary carrier, thereby increasing revolution radii of planetary gears mounted in an elastic planetary carrier and reducing backlashes between the planetary gears and an inner gear ring.

10. A planetary transmission device, wherein the planetary transmission device comprises the displacement planetary carrier system (8) according to claim 1, **characterized in that**, the planetary transmission device is a 2K-H type planetary transmission device with an inner gear ring; the wedging depth adjustment mechanism is used to push wedging sliders to expand the elastic planetary carrier, thereby increasing revolution radii of planetary gears mounted in an elastic planetary carrier and reducing backlashes between the planetary gears and an inner gear ring.
